# EUROPEAN PATENT APPLICATION

(11) **EP 2 469 933 A1**
(43) Date of publication of application: **27.06.2012**
(21) Application number: 10810040.5
(22) Date of filing: 20.08.2010
(51) Int. Cl.: H04W 48/16, H04W 36/14, H04W 36/26, H04W 36/38, H04W 48/18

(54) **MOBILE COMMUNICATION METHOD, RADIO ACCESS NETWORK DEVICE, AND EXCHANGE DEVICE**

(30) Priority: 21.08.2009 JP 2009191943
(71) Applicant: NTT DOCOMO, INC., Chiyoda-ku Tokyo 100-6150 (JP)
(72) Inventor: AOYAGI, Kenichiro, Tokyo 100-6150 (JP); KAWABE, Yasuhiro, Tokyo 100-6150 (JP); MATSUTANI, Hideyuki, Tokyo 100-6150 (JP); NAKAMURA, Yuichiro, Tokyo 100-6150 (JP)
(74) Representative: HOFFMANN EITLE
(86) International application number: PCT/JP2010/064112
(87) International publication number: WO 2011/021699

(57) **Abstract**

A mobile communication method according to the present invention includes step A of instructing, by a radio access network apparatus of a first communication scheme, a mobile station having first radio connection established with the radio access network apparatus of the first communication scheme to switch to a mobile communication system of a second communication scheme, and step B of notifying the mobile station of a priority by the mobile communication system of the second communication scheme using a predetermined signal after the mobile station establishes second radio connection with a radio access network apparatus of the second communication scheme, the priority used to determine a communication system for camping-on by the mobile station.

## Description

### TECHNICAL FIELD

The present invention relates to a mobile communication method, a radio access network apparatus and an exchange apparatus.

### BACKGROUND ART

A mobile communication system including both a WCDMA (Wideband-CDMA) mobile communication scheme and an LTE (Long Term Evolution) mobile communication scheme is configured to be able to perform Inter-RAT (Radio Access Technology) mobility control for each mobile station UE to switch between the WCDMA mobile communication system and the LTE mobile communication system.

Such a mobile communication system is configured, when "Redirection indication" to switch to the LTE mobile communication system is transmitted to a mobile station under RRC connection establishment status with the WCDMA mobile communication system, the mobile station UE releases the RRC connection established with the WCDMA mobile communication system, and starts camping-on in a cell under the control of the LTE mobile communication system.

### PRIOR ART DOCUMENT

### PATENT DOCUMENT

Patent Document 1: Japanese Patent Application Publication No. 2007-110722

### SUMMARY OF THE INVENTION

In the mobile communication system described above, the mobile station UE is configured to decide a RAT to perform camp-on based on "priority" managed as a kind of profile information.

Therefore, even when the mobile station UE starts camping-on in the cell under the control of the LTE mobile communication system according to the "Redirection indication" to the LTE mobile communication system as described above, the mobile station UE may start performing cell reselection and camping-on again in the cell under control of the WCDMA mobile communication system at a predetermined timing if the "priority" of the WCDMA scheme is higher than the "priority" of the LTE scheme.

Thus, the mobile communication system described above has the following problem in the case where the mobile communication system of a first communication scheme transmits the mobile station UE "Redirection indication" to switch from the mobile communication system of the first communication scheme (e.g. , WCDMA scheme) to the mobile communication system of a second communication scheme (e.g. , LTE scheme) _ Even in this case, since the mobile station UE manages the "priority" of the second communication scheme as being lower than the "priority" of the first communication scheme unless being previously notified that the "priority" of the second communication scheme is higher than the "priority" of the first communication scheme, the mobile station UE ends up switching back to the mobile communication system of the first communication scheme after the redirection, i.e., the mobile station UE starts camping-on in the cell under the control of the mobile communication system of the first communication scheme.

The mobile communication system described above also has the following problem even in a case where the mobile communication system of the first communication scheme transmits the "Redirection indication" after previously indicating that the "priority" of the second communication scheme is higher than the "priority" of the first communication scheme. In this case, unless the mobile station UE autonomously establishes RRC connection with the mobile communication system of the second communication scheme, the mobile station UE stays in idle mode in the mobile communication system of the second communication scheme, which seems to a user as if a call has been disconnected.

The present invention was made in consideration of the foregoing problems. It is an objective of the present invention to provide a mobile communication method, a radio access network apparatus and an exchange apparatus, which are capable of solving the problem that the mobile station UE switches back to the mobile communication system of the first communication scheme immediately after the Redirection from the mobile communication system of the first communication scheme to the mobile communication system of the second communication scheme, and the problem that the mobile station UE stays in a idle mode after the Redirection to the mobile communication system of the second communication scheme.

The first aspect of the present invention is summarized in that a mobile communication method including: step A of instructing, by a radio access network apparatus of a first communication scheme, a mobile station having first radio connection established with the radio access network apparatus of the first communication scheme to switch to a mobile communication system of a second communication scheme; and step B of notifying the mobile station of a priority by the mobile communication system of the second communication scheme using a predetermined signal after the mobile station establishes second radio connection with a radio access network apparatus of the second communication scheme, the priority used to determine a communication system for camping-on by the mobile station.

The second aspect of the present invention is summarized in that a mobile communication method including: step A of instructing, by a radio access network apparatus of a first communication scheme, a mobile station having first radio connection established with the radio access network apparatus of the first communication scheme to switch to a mobile communication system of a second communication scheme; step B of notifying the mobile communication system of the second communication scheme, by the radio access network apparatus of the first communication scheme, that the instruction has been sent to the mobile station; step C of transmitting a paging signal to the mobile station from the mobile communication system of the second communication scheme in response to the notification; and step D of transmitting a signal to request establishment of the second radio connection to a radio access network apparatus of the second communication scheme from the mobile station in response to the paging signal.

The third aspect of the present invention is summarized in that a radio access network apparatus of a second communication scheme, including: a priority notification unit configured to, after a mobile station having first radio connection established with a radio access network apparatus of a first communication scheme switches to the mobile communication system of the second communication scheme in response to an instruction from the radio access network apparatus of the first communication scheme and establishes second radio connection with the radio access network apparatus of the second communication scheme, notify the mobile station of a priority by using a predetermined signal, the priority used to determine a communication system for camping-on by the mobile station.

The fourth aspect of the present invention is summarized in that a radio access network apparatus of a second communication scheme, including: a paging signal transmission unit configured to transmit a paging signal to a mobile station, having first radio connection established with a radio access network apparatus of a first communication scheme, when receiving a notification from the radio access network apparatus of the first communication scheme that the mobile station has been instructed to switch to a mobile communication system of the second communication scheme.

The fifth aspect of the present invention is summarized in that an exchange apparatus of a second communication scheme, including: a priority notification unit configured to, after a mobile station having first radio connection established with a radio access network apparatus of a first communication scheme switches to a mobile communication system of the second communication scheme in response to an instruction from the radio access network apparatus of the first communication scheme and establishes second radio connection with the radio access network apparatus of the second communication scheme, instruct the radio access network apparatus of the second communication scheme to notify a priority by using a predetermined signal, the priority used to determine a communication system for camping-on by a mobile station.

The sixth aspect of the present invention is summarized in that an exchange apparatus of a second communication scheme, including: a paging signal transmission unit configured to instruct a radio access network apparatus of the second communication scheme to transmit a paging signal to a mobile station having first radio connection established with a radio access network apparatus of a first communication scheme when receiving a notification from the radio access network apparatus of the first communication scheme that the mobile station has been instructed to switch to a mobile communication system of the second communication scheme.

The seventh aspect of the present invention is summarized in that a radio access network apparatus of a first communication scheme, including: a determination unit configured to determine whether or not to instruct a mobile station having first radio connection established with the radio access network apparatus of the first communication scheme to switch to a mobile communication system of a second communication scheme, based on the location of the mobile station and the placement of the cell under the control of the mobile communication system of the second communication scheme.

### BRIEF DESCRIPTION OF THE DRAWINGS

Fig. 1 is an overall configuration diagram of a mobile communication system according to a first embodiment of the present invention.
Fig. 2 is a functional block diagram of a mobile station according to the first embodiment of the present invention.
Fig. 3 is a functional block diagram of an exchange apparatus according to the first embodiment of the present invention.
Fig. 4 is a functional block diagram of a radio base station according to the first embodiment of the present invention.
Fig. 5 is a sequence diagram showing operations of the mobile communication system according to the first embodiment of the present invention.
Fig. 6 is a functional block diagram of a radio network controller according to Modified Example 1 of the present invention.
Fig. 7 is a sequence diagram showing operations of a mobile communication system according to Modified Example 1 of the present invention.

### MODES FOR CARRYING OUT THE INVENTION

### (Configuration of Mobile Communication System According to First Embodiment of the Present Invention)

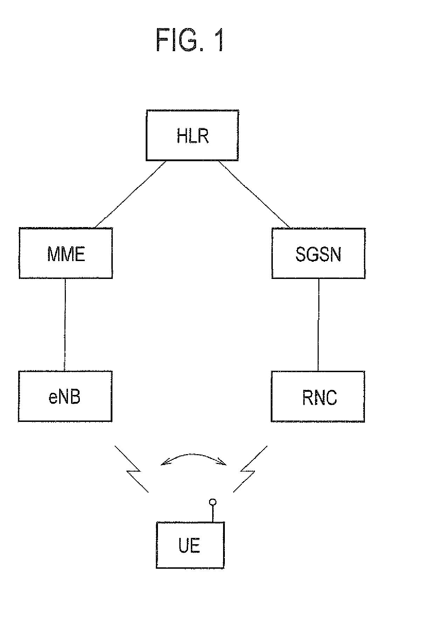

With reference to Figs. 1 to 4, a mobile communication system according to a first embodiment of the present invention is described.

The mobile communication system according to this embodiment includes a WCDMA mobile communication system (radio access network) as a mobile communication system (radio access network) of a first communication scheme, and also includes an LTE mobile communication system (radio access network) as a mobile communication system (radio access network) of a second communication scheme.

To be more specific, as shown in Fig. 1, the mobile communication system according to this embodiment includes a WCDMA exchange apparatus SGSN, a radio network controller RNC that is a WCDMA radio access network apparatus, an LTE exchange apparatus MME, a radio base station eNB that is an LTE radio access network apparatus, a mobile management server HLR (Home Location Register) connected to the WCDMA exchange apparatus SGSN and the LTE exchange apparatus MME.

Note that, in the mobile communication system according to this embodiment, a device BNB-GW for accommodating a femtocell radio base station NodeB may be used, instead of the radio network controller RNC, as the WCDMA radio access network apparatus. Moreover, a device HeNB-GW for accommodating a femtocell radio base station eNB may be used, instead of the radio base station eNB, as the LTE radio access network apparatus.

The mobile communication system according to this embodiment is configured to be able to perform Inter-RAT mobility control for a mobile station UE.

To be more specific, in the mobile communication system according to this embodiment, the mobile station UE is configured to switch over between a state of having RRC connection with the WCDMA mobile communication system (e.g. , Cell PCH state) and a state of having RRC connection with the LTE mobile communication system (e.g., Connected state).

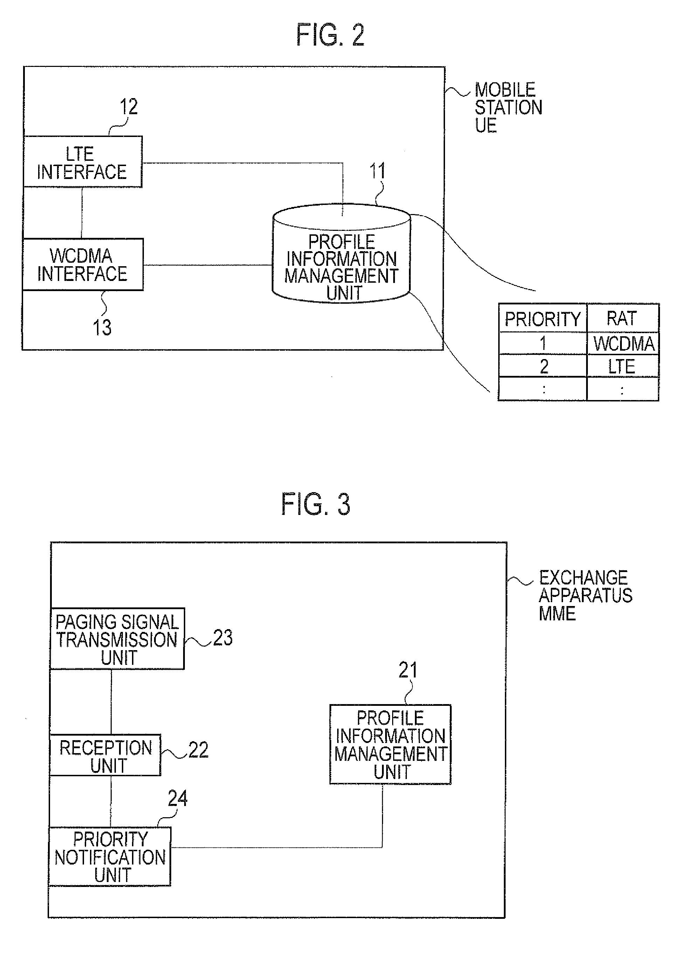

As shown in Fig. 2, the mobile station UE includes a profile information management unit 11, an LTE interface 12 and a WCDMA interface 13.

The profile information management unit 11 is configured to manage profile information on the mobile station UE.

Here, the profile information management unit 11 is configured to manage "priority" as a kind of the profile information on the mobile station UE. "priority" is used to determine a RAT for the mobile station UE to perform camp-on.

In the example shown in Fig. 1, "priority" of the WCDMA scheme is higher than "priority" of the LTE scheme. The mobile station UE is configured to perform camp-on in a cell under control of the WCDMA mobile communication system preferentially over camp-on in a cell under control of the LTE mobile communication system under the above condition.

The LTE interface 12 serves as an interface with the LTE mobile communication system, while the WCDMA interface 13 serves as an interface with the WCDMA mobile communication system.

As shown in Fig. 3, the exchange apparatus MME includes a profile information management unit 21, a reception unit 22, a paging signal transmission unit 23 and a priority notification unit 24.

The profile information management unit 21 is configured to manage profile information on a predetermined mobile station UE, e.g., a mobile station UE present in a cell under control of the exchange apparatus MME.

The reception unit 22 is configured to receive various signals transmitted by the exchange apparatus SGSN, the mobile station UE, the mobile management server HLR, and the like.

The paging signal transmission unit 23 instructs the radio base station eNB, upon reception of "New Info" from the radio network controller RNC, to transmit a paging signal to the mobile station UE.

Here, "New Info" is a notification that the mobile station UE has been instructed to switch to a mobile communication system of a specific communication system.

For example, the "New Info" may be notified by an instruction to update an "SPID (Subscriber Profile ID)" specified by 3GPP, or may be notified by an information element in a "Release Request" of RANAP/Sl or a "Cause value".

The priority notification unit 24 is configured to notify the "priority" described above using a predetermined signal, e.g., "RRC Connection Release" to release the RRC connection established between the mobile station UE and the radio base station eNB, after the "New Info" is received by the reception unit 22.

For example, when the "New Info" received by the reception unit 22 indicates that the mobile station UE has been instructed to switch to the LTE mobile communication system, the priority notification unit 24 makes a notification using "RRC Connection Release" so that the "priority" of the LTE scheme is higher than the "priority" of the WCDMA scheme.

Here, the priority notification unit 24 may notify, as the "priority" described above, the "priorities" of all the RATs managed by the mobile station UE or only the "priority" of the RAT to be changed, or may notify information indicating how to change the "priority" of each RAT.

The priority notification unit 24 may also notify the "priority" described above using "RRC Connection Release" to release the RRC connection established by the mobile station UE according to a paging signal transmitted by the radio base station eNB, after the "New Info" is received by the reception unit 22.

Alternatively, the priority notification unit 24 may notify the "priority" described above using a signal "RRC Connection Release" to release the RRC connection established in location registration of the mobile station UE with the LTE mobile communication system, after the "New Info" is received by the reception unit 22.

Note that the functions of the exchange apparatus MME shown in Fig. 3 may be provided in one or more other devices in a core network device such as the mobile management server HLR and xGSN.

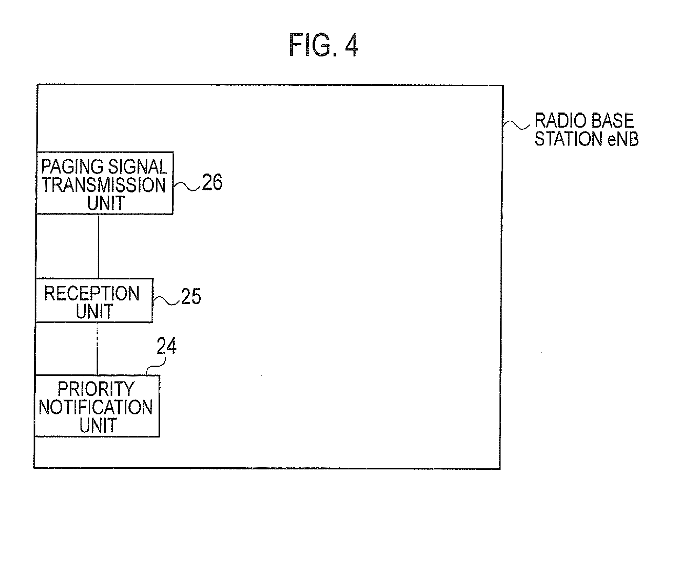

As shown in Fig. 4, the radio base station eNB includes a reception unit 25, a paging signal transmission unit 26 and a priority notification unit 26.

The reception unit 25 is configured to receive various signals transmitted by the mobile station UE, the exchange apparatus MME, and the like.

The paging signal transmission unit 26 is configured to transmit a paging signal to the mobile station UE in response to an instruction from the exchange apparatus MME.

The priority notification unit 27 is configured to notify the "priority" described above using a predetermined signal, e.g., a signal "RRC Connection Release" to release the RRC connection established with the mobile station UE, in response to the instruction from the exchange apparatus MME.

Here, the priority notification unit 27 may notify, as the "priority" described above, the "priorities" of all the RATs managed by the mobile station UE or only the "priority" of the RAT to be changed, or may notify information indicating how to change the 'priority" of each RAT.

The priority notification unit 27 may also notify the "priority" described above using "RRC Connection Release" to release the RRC connection established by the mobile station UE according to the paging signal transmitted by the paging signal transmission unit 26.

Alternatively, the priority notification unit 27 may notify the "priority" described above using "RRC Connection Release to release the RRC connection established in location registration of the mobile station UE with the LTE mobile communication system.

Note that the priority notification unit 27 may notify, upon reception of "RRC Connection Setup Complete" from the mobile station UE according to the paging signal transmitted by the paging signal transmission unit 26, the "priority" described above using "RRC Connection Release" to release the RRC connection related to the "RRC Connection Setup Complete" regardless of the instruction from the exchange apparatus MME.

### (Operations of Mobile Communication System According to First Embodiment of the Present Invention)

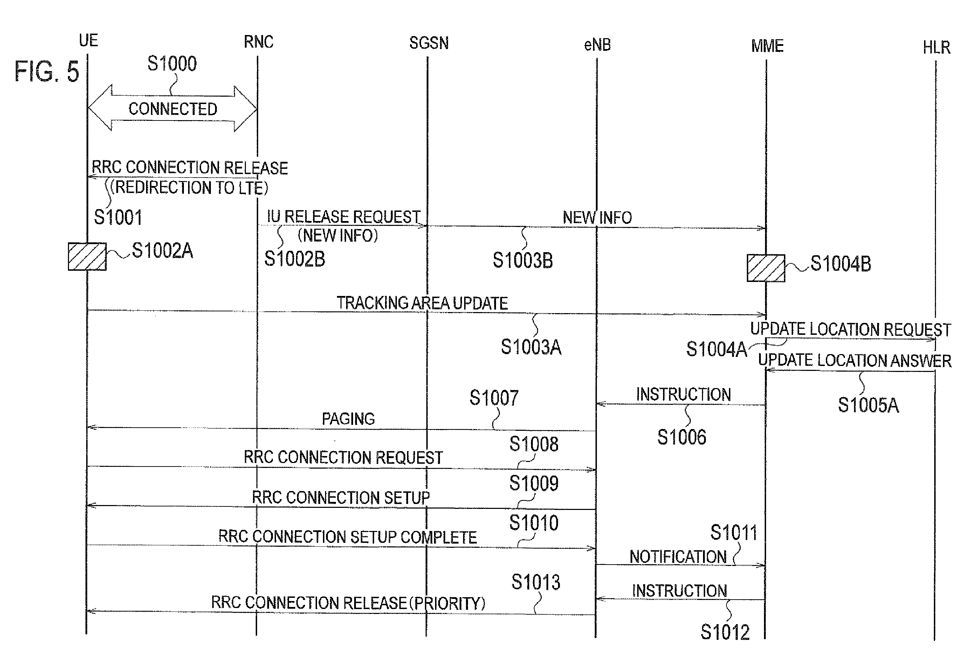

With reference to Fig. 5, description is given of operations of the mobile communication system according to the first embodiment of the present invention.

As shown in Fig. 5, when the mobile station UE has established an RRC connection with the radio network controller RNC in Step S1000, the radio network controller RNC sends the mobile station UE "RRC Connection Release (signal to release the RRC connection)" including "Redirection indication" to the LTE mobile communication system in Step S1001.

The mobile station UE determines to switch to the LTE mobile communication system in Step S1002A, and then transmits "Tracking Area Update" to the exchange apparatus MME in Step S1003A.

Thereafter, in Step S1004A, the exchange apparatus MME transmits "Update Location Request" to the mobile management server HLR in Step S1004A, and then the mobile management server HLR transmits "Update Location Answer" to the exchange apparatus MME in Step S1005A. As a result, the location registration of the mobile station UE with the LTE mobile communication system is completed.

Meanwhile, the radio network controller RNC transmits "Iu Release Request" including "New Info" to the exchange apparatus SGSN in Step S1002B, and then the exchange apparatus SGSN transmits "New Info" to the exchange apparatus MME in Step S1003B.

Here, the "New Info" is a notification that "Redirection indication" to the LTE mobile communication system has been transmitted to the mobile station UE.

In Step S1004B, the exchange apparatus MME recognizes from the "New Info" that the mobile station UE is in the "Redirection process" for the LTE mobile communication system, and stands by without starting processing of connecting the mobile station UE to the LTE mobile communication system.

In Step S1006, the exchange apparatus MME instructs the radio base station eNB to transmit a paging signal to the mobile station UE.

In Step S1007, the radio base station eNB transmits the paging signal to the mobile station UE in response to the instruction from the exchange apparatus MME.
In Step S1008, the mobile station UE transmits "RRC Connection Request" to the radio base station eNB in response to the received paging signal. Then, in Step S1009, the radio base station eNB transmits "RRC Connection Setup" to the mobile station UE. Thereafter, in Step S1010, the radio base station eNB transmits "RRC Connection Setup Complete" to the mobile station UE.

In Step S1011, the radio base station eNB notifies the exchange apparatus MME that the establishment of the RRC connection with the mobile station UE has been completed.

In Step S1012, the exchange apparatus MME instructs the radio base station eNB to release the RRC connection, in response to the notification from the radio base station eNB.

Here, when there is unsent or unreceived data on the mobile station UE in the WCDMA mobile communication system, the exchange apparatus MME may instruct the radio base station eNB to release the RRC connection after completing the transmission or reception of such data through the RRC connection.

In Step S1013, the radio base station eNB transmits "RRC Connection Release" including the "priority" described above to the mobile station UE in response to the instruction from the exchange apparatus MME.

Thereafter, the mobile station UE updates the "priority" managed as profile information, based on the "priority" included in the received "RRC Connection Release".

### (Advantageous Effects of Mobile Communication System According to First Embodiment of the Present Invention)

The mobile communication system according to the first embodiment of the present invention can solve the problem that the mobile station UE switches back to the mobile communication system of the first communication scheme immediately after Redirection from the mobile communication system of the first communication scheme to the mobile communication system of the second communication scheme, since the mobile station UE changes the managed "priority" based on the "priority" included in the "RRC Connection Release" transmitted in the mobile communication system after the Redirection.

### (Modified Example 1)

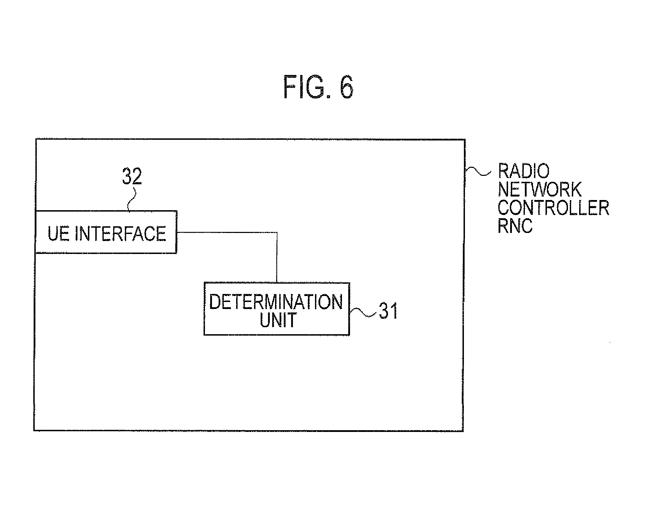

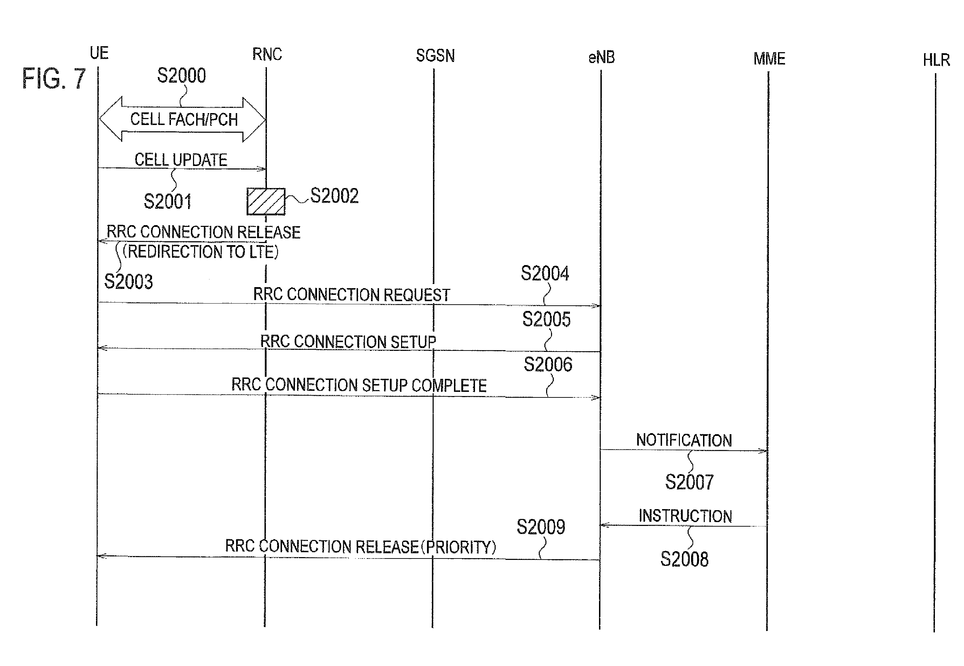

With reference to Figs. 6 and 7, description is given of Modified Example 1 of the mobile communication system according to the first embodiment described above. Hereinafter, description is given of differences between a mobile communication system according to Modified Example 1 and the mobile communication system according to the first embodiment described above.

As shown in Fig. 6, a radio network controller RNC according to Modified Example 1 includes a determination unit 31 and a UE interface 32.

The determination unit 31 is configured to determine whether or not to instruct the mobile station UE to switch to the LTE mobile communication system, based on the location of the mobile station UE having RRC connection with the radio network controller RNC and the placement of the cell under the control of the LTE mobile communication system.

Here, the determination unit 31 is configured to manage the placement of the cell under the control of the WCDMA mobile communication system and the placement of the cell under the control of the LTE mobile communication system.

The determination unit 31 is also configured to manage kinds of communication services provided in each cell.

Thus, the determination unit 31 may determine to instruct the mobile station UE to switch to the LTE mobile communication system, when determining that the location of the mobile station UE having RRC connection with the radio network controller RNC and performing predetermined communication is in the cell under the control of the LTE mobile communication system providing the predetermined communication.

Note that the determination unit 31 may calculate the location of the mobile station UE based on "Cell Update" transmitted by the mobile station UE.

The UE interface 32 serves as an interface with each mobile station UE present in the cell under the control of the radio network controller RNC.

With reference to Fig. 7, description is given below of operations of the mobile communication system according to Modified Example 1.

As shown in Fig. 7, when the mobile station UE is in "CELL FACH/PCH state" in Step S2000, the mobile station UE transmits "Cell Update" including a measurement result (e.g., measurement result on radio quality of adjacent cell) in the mobile station UE to the radio network controller RNC through a RACH (Random Access Channel) in Step S2001.

In Step S2002, the radio network controller RNC determines to instruct the mobile station UE to switch to the LTE mobile communication system, by referring to the location of the mobile station UE calculated using the measurement result included in the "Cell Update" and the placement of the cell under the control of the LTE mobile communication system.

In Step S2003, the radio network controller RNC sends the mobile station UE "RRC Connection Release (signal to release the RRC connection)" including "Redirection indication" to the LTE mobile communication system.

In Step S2004, the mobile station UE transmits "RRC Connection Request" to the radio base station eNB in response to the received "RRC Connection Release" including the "Redirection indication".

Thereafter, the radio base station eNB transmits "RRC Connection Setup" to the mobile station UE in Step S2005, and then transmits "RRC Connection Setup Compete to the mobile station UE in Step S2006.

In Step S2007, the radio base station eNB notifies the exchange apparatus MME that the establishment of the RRC connection with the mobile station UE has been completed.

In Step S2008, the exchange apparatus MME instructs the radio base station eNB to release the RRC connection, in response to the notification from the radio base station eNB.

Here, when there is unsent or unreceived data on the mobile station UE in the WCDMA mobile communication system, the exchange apparatus MME may instruct the radio base station eNB to release the RRC connection after completing the transmission or reception of such data through the RRC connection.

In Step S2009, the radio base station eNB transmits "RRC Connection Release" including the "priority" described above to the mobile station UE in response to the instruction from the exchange apparatus MME.

Thereafter, the mobile station UE updates the "priority" managed as profile information, based on the "priority" included in the received "RRC Connection Release".

### (Modified Example 2)

In the mobile communication system according to the first embodiment and Modified Example 1, the description is given of the case where the mobile station UE switches from the WCDMA mobile communication system to the LTE mobile communication system. However, the present invention is not limited to the above case, but is also applicable to a case where the mobile station UE switches from the LTE mobile communication system to the WCDMA mobile communication system.

In such a case, the exchange apparatus SGSN includes the functions of the exchange apparatus MME shown in Fig. 3, and the radio network controller RNC includes the functions of the radio base station eNB shown in Fig. 4.

The above aspects of this embodiment may be expressed as follows.

A first aspect of this embodiment is a mobile communication method including: step A of instructing, by a radio network controller RNC (radio access network apparatus of a first communication scheme), a mobile station UE having RRC connection #1 (first radio connection) established with the radio network controller RNC to switch to a mobile communication system of LTE scheme (second communication scheme) ; and step B of, after the mobile station UE establishes RRC connection #2 with a radio base station eNB (radio access network apparatus of the second communication scheme), notifying the mobile station UE of a priority by the LTE mobile communication system using a predetermined signal (e.g., signal to release RRC connection #2 (second radio connection)), the priority used to determine a RAT (communication system) for camping-on by the mobile station UE.

A second aspect of this embodiment is a mobile communication method including: step A of instructing, by a radio network controller RNC, a mobile station UE having RRC connection #1 established with the radio network controller RNC to switch to an LTE mobile communication system; step B of notifying the LTE mobile communication system, by the radio network controller RNC, that the instruction described above has been sent to the mobile station UE; step C of transmitting, by the LTE mobile communication system, a paging signal to the mobile station UE in response to the notification; and step D of transmitting, by the mobile station UE, "RRC Connection Request" to request establishment of RRC connection #2 to a radio base station eNB in response to the paging signal addressed to the mobile station.

In the first or second aspect of this embodiment, the radio network controller RNC may perform the instruction described above, in the step A, to the mobile station UE based on the location of the mobile station UE and the placement of the cell under the control of the LTE mobile communication system.

A third aspect of this embodiment is a radio base station eNB including a priority notification unit 27 configured to, after a mobile station UE having RRC connection #1 established with a radio network controller RNC switches to the LTE mobile communication system in response to an instruction from the radio network controller RNC and establishes the RRC connection #2 with the radio base station eNB, notify a priority used to determine a RAT for camping-on by a mobile station UE by using a predetermined signal (e.g., "RRC Connection Release" to release RRC connection #2).

A fourth aspect of this embodiment is a radio base station eNB including a paging signal transmission unit 26 configured to transmit a paging signal to a mobile station UE, having RRC connection #1 established with a radio network controller RNC, when receiving a notification from the radio network controller RNC that the mobile station UE has been instructed to switch to an LTE mobile communication system.

A fifth aspect of this embodiment is an exchange apparatus MME (exchange apparatus of the second communication scheme) including a priority notification unit 24 configured to, after a mobile station UE having RRC connection #1 established with a radio network controller RNC switches to the LTE mobile communication system in response to an instruction from the radio network controller RNC and establishes RRC connection #2 with a radio base station eNB, instruct the radio base station eNB to notify a priority used to determine a RAT for camping-on by a mobile station UE by using a signal to release RRC connection #2.

A sixth aspect of this embodiment is an exchange apparatus MME including a paging signal transmission unit 23 configured to instruct a radio base station eNB to transmit a paging signal to a mobile station UE, having RRC connection #1 established with a radio network controller RNC, when receiving a notification from the radio network controller RNC that the mobile station UE has been instructed to switch to an LTE mobile communication system.

A seventh aspect of this embodiment is a radio network controller RNC including a determination unit 31 configured to determine whether or not to instruct a mobile station UE having RRC connection #1 established with the radio network controller RNC to switch to an LTE mobile communication system, based on the location of the mobile station UE and the placement of the cell under the control of the LTE mobile communication system.

Note that the above described operations of the mobile management server HLR, the exchange apparatus SGSN, the radio network controller RNC, the exchange apparatus MME, the radio base station eNB, and the mobile station UE may be implemented by hardware, may be implemented by a software module executed by a processor, or may be implemented by a combination of both.

The software module may be provided in any type of storage medium such as a RAM (Random Access Memory), a flash memory, a ROM (Read Only Memory), an EPROM (Erasable Programmable ROM), an EEPROM (Electronically Erasable and Programmable ROM), a register, a hard disk drive, a removable disk, or a CD-ROM.

The storage medium is connected to the processor so that the processor can read and write information from and to the storage medium. Also, the storage medium may be integrated into the processor. Also, the storage medium and the processor may be provided in an ASPIC. The ASPIC may be provided in the mobile management server HLR, the exchange apparatus SGSN, the radio network controller RNC, the exchange apparatus MME, the radio base station eNB, and the mobile station UE. Also, the storage medium and the processor may be provided in the mobile management server HLR, the exchange apparatus SGSN, the radio network controller RNC, the exchange apparatus MME, the radio base station eNB, and the mobile station UE as a discrete component.

Hereinabove, the present invention has been described in detail using the above embodiment; however, it is apparent to those skilled in the art that the present invention is not limited to the embodiment described herein. Modifications and variations of the present invention can be made without departing from the scope of the present invention defined by the description of the scope of claims. Thus, what is described herein is for illustrative purpose, and has no intention whatsoever to limit the present invention.

Note that the entire content of Japanese Patent Application No. 2009-191943 (filed on August 21, 2009) is incorporated herein by reference.

### INDUSTRIAL APPLICABILITY

The present invention is useful for radio communication and the like since the invention can provide a mobile communication method, a radio access network apparatus and an exchange apparatus, which are capable of solving the problem that the mobile station UE switches back to the mobile communication system of the first communication scheme immediately after Redirection from the mobile communication system of the first communication scheme to the mobile communication system of the second communication scheme, and the problem that the mobile station UE stays in a idle mode after the Redirection to the mobile communication system of the second communication scheme.

### EXPLANATION OF REFERENCE NUMERALS

UE... mobile station
11, 21... profile information management unit
12... LTE interface
13... WCDMA interface
MME... exchange apparatus
eNB.., radio base station
22, 25... reception unit
23, 26... paging signal transmission unit
24, 27.., priority notification unit
RNC... radio network controller
31.., determination unit
32... UE interface

## Claims

1. A mobile communication method comprising:
step A of instructing, by a radio access network apparatus of a first communication scheme, a mobile station having first radio connection established with the radio access network apparatus of the first communication scheme to switch to a mobile communication system of a second communication scheme; and
step B of notifying the mobile station of a priority by the mobile communication system of the second communication scheme using a predetermined signal after the mobile station establishes second radio connection with a radio access network apparatus of the second communication scheme, the priority used to determine a communication system for camping-on by the mobile station.

2. A mobile communication method comprising:
step A of instructing, by a radio access network apparatus of a first communication scheme, a mobile station having first radio connection established with the radio access network apparatus of the first communication scheme to switch to a mobile communication system of a second communication scheme;
step B of notifying the mobile communication system of the second communication scheme, by the radio access network apparatus of the first communication scheme, that the instruction has been sent to the mobile station;
step C of transmitting a paging signal to the mobile station from the mobile communication system of the second communication scheme in response to the notification; and
step D of transmitting a signal to request establishment of the second radio connection to a radio access network apparatus of the second communication scheme from the mobile station in response to the paging signal.

3. The mobile communication method according to one of claims 1 and 2, wherein
in the step A, the radio access network apparatus of the first communication scheme performs the instruction to the mobile station based on the location of the mobile station UE and the placement of the cell under the control of the mobile communication system of the second communication scheme.

4. A radio access network apparatus of a second communication scheme, comprising:
a priority notification unit configured to, after a mobile station having first radio connection established with a radio access network apparatus of a first communication scheme switches to the mobile communication system of the second communication scheme in response to an instruction from the radio access network apparatus of the first communication scheme and establishes second radio connection with the radio access network apparatus of the second communication scheme, notify the mobile station of a priority by using a predetermined signal, the priority used to determine a communication system for camping-on by the mobile station.

5. A radio access network apparatus of a second communication scheme, comprising:
a paging signal transmission unit configured to transmit a paging signal to a mobile station, having first radio connection established with a radio access network apparatus of a first communication scheme, when receiving a notification from the radio access network apparatus of the first communication scheme that the mobile station has been instructed to switch to a mobile communication system of the second communication scheme.

6. An exchange apparatus of a second communication scheme, comprising:
a priority notification unit configured to, after a mobile station having first radio connection established with a radio access network apparatus of a first communication scheme switches to a mobile communication system of the second communication scheme in response to an instruction from the radio access network apparatus of the first communication scheme and establishes second radio connection with the radio access network apparatus of the second communication scheme, instruct the radio access network apparatus of the second communication scheme to notify a priority by using a predetermined signal, the priority used to determine a communication system for camping-on by a mobile station.

7. An exchange apparatus of a second communication scheme, comprising:
a paging signal transmission unit configured to instruct a radio access network apparatus of the second communication scheme to transmit a paging signal to a mobile station having first radio connection established with a radio access network apparatus of a first communication scheme when receiving a notification from the radio access network apparatus of the first communication scheme that the mobile station has been instructed to switch to a mobile communication system of the second communication scheme.

8. A radio access network apparatus of a first communication scheme, comprising:
a determination unit configured to determine whether or not to instruct a mobile station having first radio connection established with the radio access network apparatus of the first communication scheme to switch to a mobile communication system of a second communication scheme, based on the location of the mobile station and the placement of the cell under the control of the mobile communication system of the second communication scheme.
